# EUROPEAN PATENT SPECIFICATION

(11) **EP 2 802 202 B1**
(45) Date of publication and mention of the grant of the patent: **30.03.2016**
(21) Application number: 13706713.8
(22) Date of filing: 11.01.2013
(51) Int. Cl.: B60B 15/00, B60B 35/12, G01L 1/22, G01L 5/16, A01B 63/112, A01B 63/114, A01B 63/14, B60B 35/16

(54) **AXLE ASSEMBLY HOUSING**
GEHÄUSE FÜR EINE ACHSANORDNUNG
BOÎTIER D'ENSEMBLE D'ESSIEU

(30) Priority: 13.01.2012 GB 201200529
(43) Date of publication of application: 19.11.2014
(73) Proprietor: AGCO International GmbH, 8212 Neuhausen am Rheinfall (CH)
(72) Inventor: STOIBER, Martin, 94522 Wallersdorf (Haidlfing) (DE); FRIES, Stefan, 87616 Marktoberdorf (DE); WÜRTELE, Eberhard, 87616 Marktoberdorf (DE)
(74) Representative: White, Andrew Gordon
(86) International application number: PCT/IB2013/000035
(87) International publication number: WO 2013/104981

(56) References cited:
- WO-A1-2013/013917
- JP-A- H09 309 465
- US-A- 4 173 259

## Description

The present invention relates to means for facilitating measuring of the axle load of a rigid axle and especially, although not exclusively, the rear axle of an agricultural vehicle such as a tractor.

To improve efficiency and reduce damage to the ground during operation, modern tractors may be equipped with tyre pressure control systems or efficiency control systems as described in applicant's co-pending UK patent application No. GB1112568.9 and GB 1112569.7 filed on 22.07.2011. In operation, these systems require a precise knowledge of the wheel load of each wheel or axle to enable, for example, the adjustment of tyre pressures without exceeding the tyre capability, or the generation of an optimised load distribution profile to provide guidance to the operator on ballasting of the tractor.

It is well known, for suspended axles, to determine the wheel load by measuring the pressure in the hydraulic or pneumatic cylinders of the suspension. However, in the case of a tractor, only the front axle is equipped with such a suspension system from which the wheel load may be determined, so the rear axle requires a different solution. According to one approach, it is known to use axle bearings which are equipped with load sensing means. These means require changes in the axle installation and are costly. Furthermore, optional usage is not generally an economic option due to the impact of the changes on the complete axle design and the resulting costs.

United States patent US 4,173,259 describes a load sensing device which senses deformation of the rear drive housing of a tractor to control the draft load by raising or lowering of an implement. The sensing may be electrical or mechanical and the signal produced by the strain on the rear drive is amplified and used to control a hydraulic control valve to a hydraulic weight distribution system. The document indicates that electric strain gauges or sensors may be mounted on any member deforming in response to loading. However, the performance of strain gauges can vary widely with position and less than optimum performance can easily result. Other similar trumpet housings with sensing devices are known from documents WO 2013/013917 and JP409309465.

It is, therefore, an object of the invention to provide an improved axle assembly which mitigates the above problems.

The problem is solved in accordance with the invention by a trumpet housing with the features of claim 1.

With such a trumpet housing, the attachment area suitably bridges the first and second portions, and may include at least a first mounting point (optionally on the first portion) and a second mounting point (optionally on the second portion), with the second mounting point being at a greater distance from the longitudinal axis than the first mounting point. Such an arrangement (which may include four or more mounting points) utilises the applicant's recognition that such positioning will give the highest amplification of strain in operation enabling an improved accuracy in deriving results.

For a trumpet housing as recited in the preceding paragraph, each mounting point may comprise a material accumulation providing a protrusion from the surface of the respective first or second portion. The attachment area may be shaped to provide a valley between the first and second mounting points. Each mounting point may include a substantially flat surface to receive a strain sensor, with the respective flat surfaces of the attachment area being coplanar, and each mounting point may include a threaded bore to receive a correspondingly threaded fixative means such as a bolt or screw for securing a strain sensor.

Where the trumpet housing attachment area includes mounting points, one or more of those mounting points may include a further protrusion constraining lateral movement of a strain sensor mounted to the attachment area.

In a further aspect there is provided a rear axle assembly for an agricultural vehicle comprising a pair of trumpet housings according to the present invention, a pair of wheel hubs each being mounted to a respective one of same trumpet housings and being rotatable about the longitudinal axis, a differential coupled to transfer torque to the wheel hubs, a differential housing partly surrounding the differential and to which the trumpet housings are attached, and at least one strain sensor mounted to the attachment area of one of the trumpet housings. Suitably, each trumpet housing has at least one strain sensor mounted thereto, with the attachment area being formed on an interior or exterior surface of the housing. When formed on an external surface, the or each strain sensor may suitably be enclosed between a wall of the housing and a respective protective cover.

In a still further aspect there is provided an axle load measuring apparatus comprising a rear axle assembly as recited in the preceding paragraph together with data processing means coupled to receive an output signal from the or each strain sensor and arranged to generate an output value representative of axle loading based thereon.

In yet a further aspect there is provided an agricultural vehicle comprising an axle load measuring apparatus as recited in the preceding paragraph wherein the generated output value is representative of the vehicle draft force. Such an output value may be used by means provided to control a three-point linkage or systems to improve efficiency or traction.

Further advantages of the invention will become apparent from reading the following description of specific embodiments with reference to the appended drawings in which:-
Figure 1 shows a side view of a tractor;
Figure 2 shows a front view of an axle load measuring arrangement according to the present invention;
Figure 3 shows a perspective view of the axle load measuring arrangement of Figure 2;
Figure 4 shows vertical section through a rear axle assembly taken on line A-A of Figure 1;
Figure 5 shows an enlarged view of a part of the sectional view Figure 4;
Figure 6 shows detail Y of Figure 5;
Figure 7 shows a further embodiment of the present invention shown in detail Y of Figure 5;
Figure 8 is a modified version of Figure 5 showing further embodiments of the present invention; and
Figure 9 schematically represents the components of a data processing system for use in an axle load measuring apparatus.

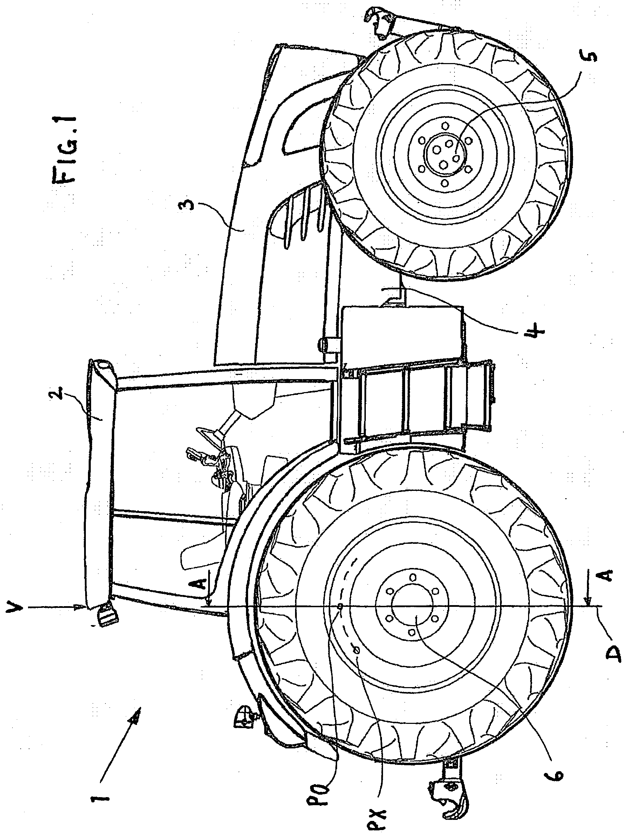

Referring to Figure 1, a tractor 1 is shown having a cab 2 and an engine compartment 3. A chassis 4 which is partly visible connects front wheel mounting 5 and rear axle 6. The front wheel mounting 5 is equipped with an independent wheel suspension as described in applicants granted patent EP 1 627 762 with upper and lower transverse links mounting steered wheel hubs to the chassis and with vertical movement of each hub being damped by a respective hydraulic cylinder. As mentioned previously, the load of the front axle can be determined by measuring the pressure in the hydraulic cylinders of the suspension.

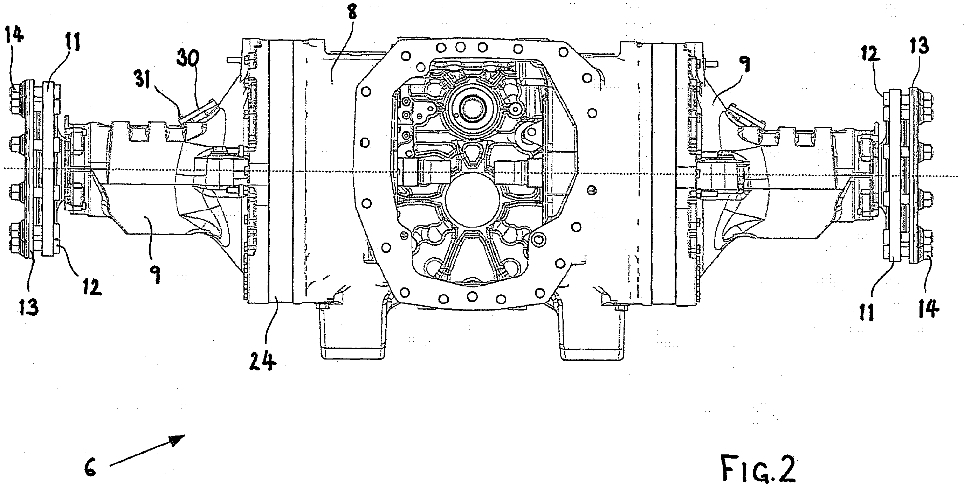

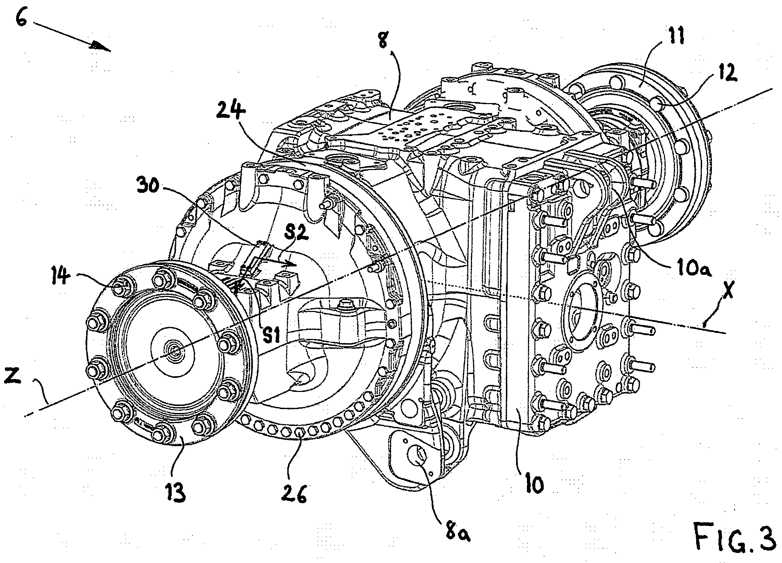

Figures 2 and 3 show the structure of rear axle 6 the principal components of which are a central rear axle (differential) housing 8, and one outer trumpet housing 9 on each side. Central rear axle housing 8 has attachment points 8a for the lower links of a three-point linkage and is closed towards the rear end of the tractor by back cover 10. Back cover 10 has an attachment point 10a for the top link of a three point linkage. At the outer end of each outer trumpet housing 9, a hub flange 11 is provided to attach wheels which carry a pneumatic tyre (not shown) and are clamped by bolts 12, a clamping ring 13 and nuts 14.

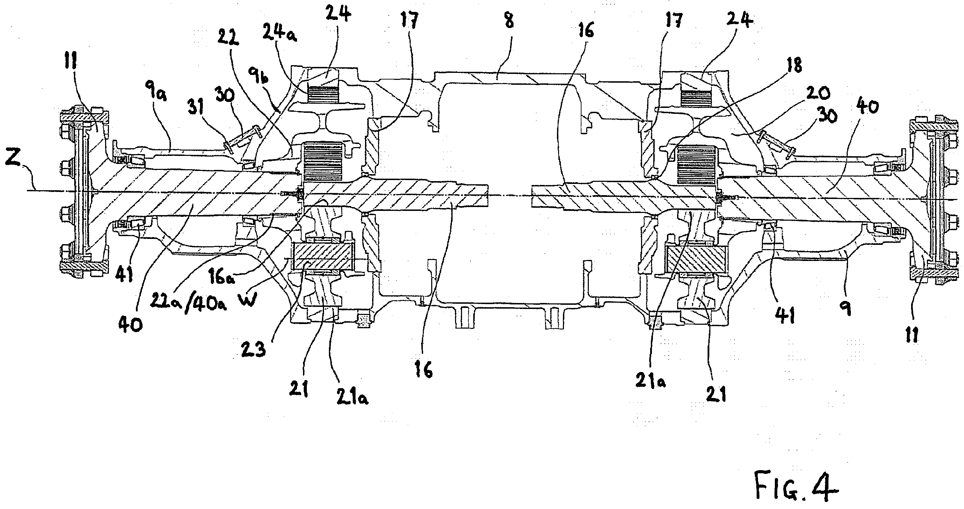

Figure 4 shows a vertical section through the rear axle 6 taken on line A-A (Figure 1). Referring now to Figures 2 to 4, central rear axle housing 8 houses a differential which transfers the engine torque to respective axle shafts 16 on each side. Operable to restrict rotation of the shafts 16, braking means, as described in applicant's co-pending UK patent application No. GB 1110634.1 filed 23.06.2011, are provided. Details of the differential, braking means, and bearings related to shafts 16 are not shown for clarity reasons as they are not relevant to the operation of the invention. Central rear axle housing 8 is closed towards trumpet housing 9 by a housing cover 17 which is sealed towards axle shaft 16 by a shaft sealing ring 18.

Each axle shaft 16 is formed with a gearing 16a at its end remote from the differential and thereby forms the sun wheel of a planetary drive 20. Gearing 16a meshes with the exterior gear teeth 21a of the three planetary wheels 21. Each planetary wheel 21 is mounted to planetary carrier 22 by a respective mounting pin 23 so that each wheel is rotatable about a respective axis W. As axle shaft 16 rotates, gearing 16a engages with exterior gear teeth 21 a of the three planetary wheels 21 and thereby the planetary wheels 21 also rotate about their respective axes W and describe a circular path about axis Z.

The planetary wheels 21 are enclosed by a ring gear 24 which is attached in a fixed (non-rotatable) manner to both the central housing 8 and trumpet housing 9 by screws 26 as shown in Figure 3 so that outer contour of ring gear 24 forms part of the outer contour of the axle structure 6. The exterior gear teeth 21a of planetary wheels 21 are meshed with gearing 24a of ring gear 24 at the interior side thereof. When the axle shaft 16 is driven, the planetary wheels 21 mounted on the planetary carrier 22 are rotated about their respective axes W. As the planetary wheel 21 with its gearing 21a is also meshed with the gearing 24a of ring gear 24 and the ring gear 24 is fixed, the planetary carrier 22 is rotated about axis Z and the individual planetary wheels 21 circle around axis Z on a circular path, turning also about axes W.

The planetary carrier 22 forms a housing around the planetary gear train 20 and interior components and is connected in a torque-proof way by bolts (not shown) and engaging gearings 22a/40a to wheel hub 40 which is rotatably mounted in trumpet housing 9 and rotates about axis Z. Wheel hub 40 is an integrated part with hub flange 11 on which the wheels are mounted as described above. Wheel hub 40 is supported by bearings 41 and sealed towards the atmosphere by shaft sealing rings to avoid debris entering into the interior and to keep oil inside.

A load applied by the weight of the vehicle or an external load (attached to the tractor) results in a deformation of the axle structure 6. The deformation of the axle structure caused by a vertical axle load is the largest in a plane perpendicular to axis Z and located along Z at a point where the external contour of the axle assembly transitions from a smaller diameter to a larger diameter as this is the area were the largest change in stiffness occurs. In terms of the trumpet housing 9, this comprises a first portion 9a extending generally in the direction of the Z axis and having a substantially constant profile or diameter, together with a second portion 9b attached to the first and having a profile increasing in diameter or distance from the Z axis as the distance from the point P0 of union with the first portion increases.

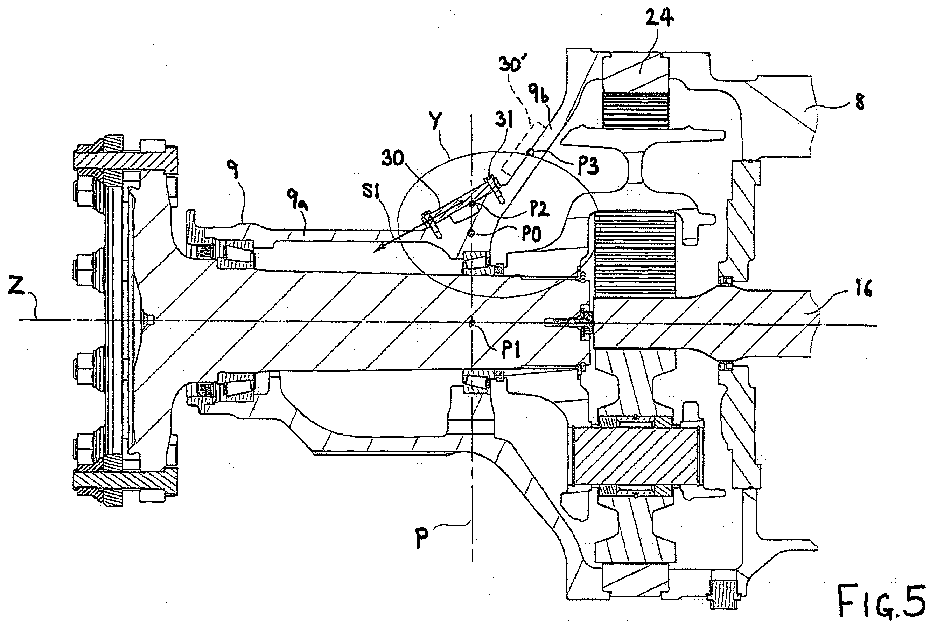

This plane perpendicular to the Z axis is represented in Figure 5 by line P which passes through the point P0 where the pipe-shaped portion 9a merges with funnel-shaped portion 9b. At this general location, the present invention provides an attachment area shaped to receive a strain sensor 30.

As the axle load is applied in vertical direction, the best position of the sensor in the vertical direction is defined by the requirement that the distance from the sensor to the point of intersection P1 between the axis Z and the plane described above should be as large as possible. As best seen in Figure 5, the chosen position (shown with P2) is in the optimum range. As a result, the load creates the maximum deformation enabling a high resolution in the sensor output and thereby a good measuring accuracy.

As the axle structure 6 is stiffened in the area around P0, P1 and P2 by bearings 41 and wheel hub 40, it may be more appropriate to position the sensor (as shown by dashed line 30') at a point P3 in the area of the funnel-shaped portion 9b close to but separate from P0/P2. This area is thin-walled and less stiffened so the increased deformation for a given strain compensates for the separation from the optimum location.

The Z axis and the force line of the vertical load V lie in a plane D (see Figure 1) on which the point P0 (and P2 and P3) should ideally be positioned. In this way, the influence of horizontal forces such as draft force is mitigated. If these points are positioned outside of the plane D (as shown in Figure 1 by the point PX) the influence of horizontal forces must be compensated for, for example by the use of characteristic maps.

The applicants have further appreciated that the position P2 is suitable due to the fact that the installation space in this area is available, that is to say in known trumpet housings there are not obstructions in the vicinity of P0/P2/P3 which would otherwise prevent the provision of the shaped attachment area.

In a preferred embodiment, the strain gauge sensor 30 is attached by four screws or bolts 31 to the trumpet housing 9 at an inclined angle to the rotational axis Z in an area where space is available and deformation is sufficient. This can be seen in Figure 3.

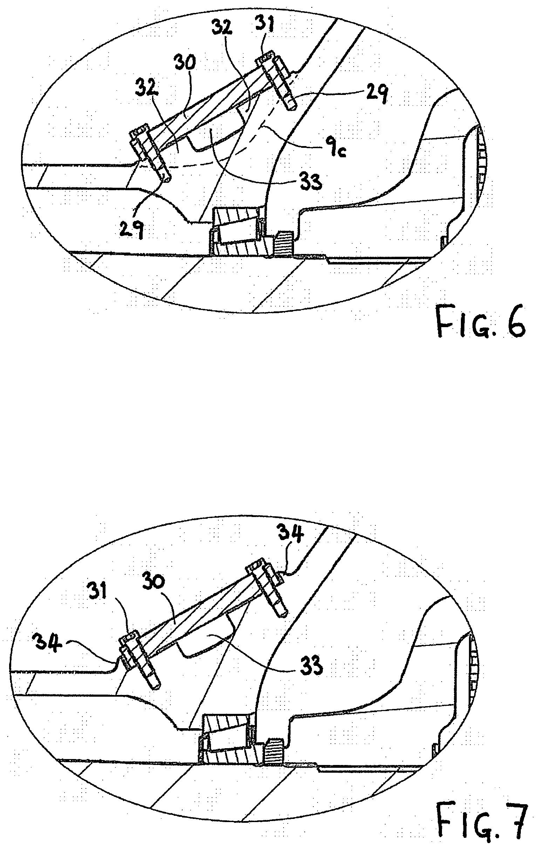

Referring now to Figure 6, to further improve the deformation of the attachment area of the strain gauge sensor 30, the trumpet housing 9 is equipped with one or more radially extending material accumulations 32 compared to the previous contour shown by dotted line 9c. The accumulations 32 provide first and second mounting points for the sensor 30, suitably in the form of a pair of coplanar flat surfaces interrupted in between by a valley 33 to allow deformation (a closed material accumulation would probably reduce overall deformation/strain). The strain gauge sensor 30 does not contact the trumpet housing 9 in this valley area. The material accumulations 32 are used to house threaded bores 29 to receive the screws or bolts 31. To protect strain gauge sensor 30 an additional cover (not shown), ideally mating with the contour of trumpet housing 9, may be provided to protect the strain gauge sensor 30 from falling objects and debris during operation.

The strain gauge sensor 30 can measure deformation in two directions, represented in Figures 3 and 5 by arrows S1 and S2. This has two major advantages. Firstly, the strain gauge sensor 30 may be provided with temperature compensation based on the relation between the deformation in directions S1 and S2. Secondly, in addition to determining vertical loading, the strain gauge sensor 30 can also be used to determine a horizontal deformation in the driving direction (along axis X) which offers determination of the draft force applied. This determination may for example be used for control of an electro-hydraulic three-point hitch (three-point linkage) as described in applicant's co-pending UK patent application GB1117724.3 filed 13.10.2011, or efficiency improving systems or slip control systems as described in applicant's co-pending UK patent application GB1112568.9 filed 22.07.2011.

Alternatively, a strain gauge sensor 30 which can measure deformation in only one direction, preferably in direction S1, could be installed. The temperature compensation may then be provided by determining the temperature of the housing (which is more or less equal to the sensor temperature) by using a surface temperature sensor. Furthermore, an ambient temperature sensor or a sensor measuring oil temperature in the housing may be used to determine sensor temperature with a stored characteristic map showing the relation between both parameters and thereby enabling compensation for temperature influence.

Figure 7 shows a further embodiment of the invention in which the material accumulations of the attachment area are extended to provide mating contours 34 between which the strain gauge sensor 30 is mounted as an interference fit. This tight mounting can help to improve measurement and reduces the risk of the sensor becoming detached due to loosened screws 31.

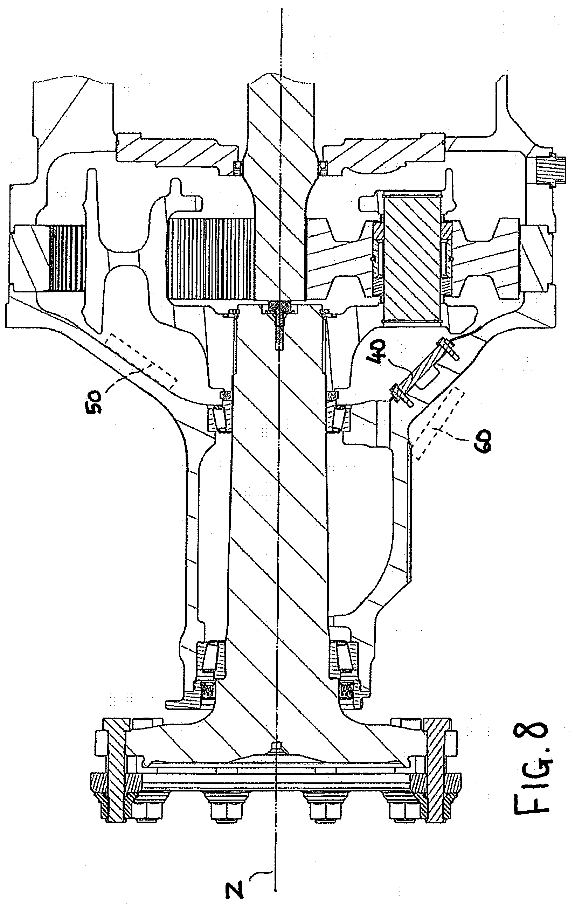

Figure 8 shows alternative further embodiments including having the strain gauge sensor 40, 50 positioned within the trumpet housing 9 with the attachment area formed on an internal surface close to the ideal area as defined above with the advantage that the sensor is protected from damage. As will be recognised, sensor 50 is an "internal" arrangement of the alternate sensor location 30' of Figure 5. The sensor can be positioned above the axis Z (sensor 50) or beneath axis Z (sensor 60). As a further alternative, the sensor 60 may be positioned outside the housing in similar manner to the embodiment shown in Figure 5 but beneath axis Z. Connection, including material accumulations 32 and/or valleys 33, may be similar to that described before for all such further embodiments.

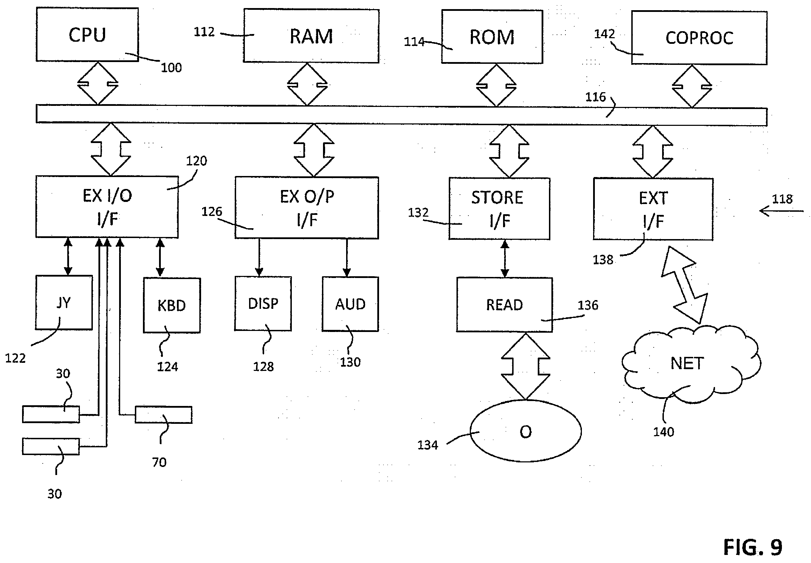

Figure 9 schematically represents components of a system to receive the output from one or more strain sensors 30 and provide an axle load measuring apparatus including the rear axle assembly described above.

A first processor CPU 100 is coupled with random access memory RAM 112 and read only memory ROM 114 by an address and data bus 116. RAM 112 will typically hold the captured sensor data for processing whilst ROM 114 stores reference data such as the previously mentioned characteristic map of the relation between temperature and sensor output. Also connected to CPU 100 via the address and data bus 116 is at least one further processor COPROC 142, which may be a further CPU sharing tasks with the first CPU 100, or may be a coprocessor device supplementing the function of the CPU 100, handling background or lower level processes such as floating point arithmetic and signal processing. Each of these internal hardware devices 100, 112, 114, 142 includes a respective interface (not shown) supporting connection to the bus 216. These interfaces are conventional in form and need not be described in further detail.

Also connected to the CPU 100 via bus 116 are a number of external hardware device interface stages (generally denoted 118). A first interface stage 120 supports the connection of external input/output devices, such as a joystick or mouse 122 and/or keyboard 124. Also connected to the first interface stage 120 are the strain sensors 30 from the rear axle assembly, together with a further sensor 70 which provides an output indicative of the front wheel/axle loading. Other sensors such as a temperature sensor may also be connected.

The configuration of the first interface stage 120 may vary in dependence on, for example, the type of devices connected thereto and the format of communications on address and data bus 116. In relation to the sensors 30, however, it will typically include an amplification stage and one or more analog to digital converters. Based on the digitised sensor output values received via the bus 116, CPU 100 and/or coprocessor 142 calculates (following a stored computer program) the front and rear wheel loadings for the vehicle, which loadings may then be used to guide adjustment of ballasting for example.

A second interface stage 126 supports the connection of external output devices such as a display screen 128 and/or audio output device 130, such as headphones or speakers. The display screen 128 may be used to present the derived wheel loadings to a user. A third interface stage 132 supports the connection to external data storage devices in the form of computer readable media: such external storage may as shown be provided by a removable optical or magnetic disc 134 (accessed by a suitably configured disc reader 136). Alternatively or additionally the external storage may be in the form of a solid state memory device such as an extension drive or memory stick device. The external storage may contain a computer program.

A fourth interface stage 138 supports connection of the system to remote devices or systems via wired or wireless networks 140, for example over a local area network LAN, via the internet, or another data source, for example for the downloading of program updates or updated reference data tables.

From reading of the present disclosure, other modifications will be apparent to those skilled in the art. Such modifications may involve other features which are already known in the field of vehicle suspension systems and component parts therefore and which may be used instead of or in addition to features described herein. For example, alternative methods for attachment of the sensor 30 may be provided, including mounting by gluing or combination of screwing and gluing. Furthermore, other configurations of strain sensor, such as a strain bore sensor which is inserted into a bore and deformed by the bore geometry, may be installed.

## Claims

1. A trumpet housing (9) for a rigid axle (6) assembly having a longitudinal axis (Z) and comprising a first portion (9a) extending along said axis (Z) and having a substantially constant profile, and a second portion (9b) attached to the first portion (9a) and having a profile increasing in distance from the axis as the distance from the first portion (9a) increases, wherein the housing (9) further comprises an attachment area (9c) shaped to receive a strain sensor (30) for determination of a wheel load, **characterised in that** the attachment area (9c) bridges the first and second portions (9a, 9b).

2. A trumpet housing (9) as claimed in Claim 1 wherein the attachment area (9c) includes at least a first mounting point (32) and a second mounting point (32), with the second mounting point (32) being at a greater distance from the longitudinal axis (Z) than the first mounting point (32).

3. A trumpet housing (9) as claimed in Claim 2, wherein each mounting point (32) comprises a material accumulation providing a protrusion from the surface of the respective first or second portion (9a, 9b).

4. A trumpet housing (9) as claimed in Claim 2 or Claim 3, wherein the attachment area (9c) is shaped to provide a valley between the first and second mounting points (32).

5. A trumpet housing as claimed in any of Claims 2 to 4, wherein each mounting point (32) includes a substantially flat surface to receive a strain sensor (30), with the respective flat surfaces of the attachment area (9c) being coplanar.

6. A trumpet housing (9) as claimed in any of Claims 2 to 5, wherein each mounting point (32) includes at least one threaded bore (29) to receive a correspondingly threaded fixative means (31) for securing a strain sensor (30).

7. A trumpet housing (9) as claimed in Claim 3, wherein one or more of the mounting points (32) includes a further protrusion constraining lateral movement of a strain sensor (30) mounted to the attachment area (9c).

8. A trumpet housing (9) as claimed in any of Claims 2 to 6, wherein the attachment area (9c) comprises at least four mounting points (32).

9. A trumpet housing (9) as claimed in any preceding claim, wherein the attachment area (9c) is formed on an interior surface of the housing (9).

10. A rear axle assembly (6) for an agricultural vehicle comprising a pair of trumpet housings (9) as claimed in any preceding claim, a pair of wheel hubs (11) each being mounted to a respective one of same trumpet housings (9) and being rotatable about the longitudinal axis (Z), a differential coupled to transfer torque to the wheel hubs (11), a differential housing (8) partly surrounding the differential and to which the trumpet housings (9) are attached, and at least one strain sensor (30) mounted to the attachment area (9c) of one of the trumpet housings (9).

11. A rear axle assembly (6) as claimed in Claim 10, wherein each trumpet housing (9) has at least one strain sensor (30) mounted thereto.

12. A rear axle assembly (6) as claimed in Claim 10 or Claim 11, wherein the or each strain sensor (30) is enclosed between a wall of the housing (9) and a respective protective cover.

13. An axle load measuring apparatus comprising a rear axle assembly (6) as claimed in any of Claims 10 to 12 and data processing means (100) coupled to receive an output signal from the or each strain sensor (30) and arranged to generate an output value representative of axle loading based thereon.

14. An agricultural vehicle comprising an axle load measuring apparatus as claimed in Claim 13 wherein the data processing means (100) output value is representative of vehicle draft force.

15. An agricultural vehicle as claimed in Claim 14, further comprising means to control a three-point linkage or systems to improve efficiency or traction based on the data processing means (100) output value.

## Patentansprüche

1. Achstrichtergehäuse (9) für eine Starrachsbaugruppe (6) mit einer Längsachse (Z) und einem ersten Teilbereich (9a), der sich entlang der Achse (Z) erstreckt und ein im Wesentlichen konstantes Profil aufweist, und einem zweiten Teilbereich (9b), der an dem ersten Teilbereich (9a) befestigt ist und ein Profil aufweist, dessen Abstand von der Achse (Z) mit anwachsendem Abstand von dem ersten Teilbereich (9a) anwächst, wobei das Gehäuse (9) weiterhin einen Befestigungsbereich (9c) aufweist, der für die Aufnahme eines Dehnungssensors (30) zur Bestimmung einer Radlast ausgebildet ist, **dadurch gekennzeichnet, dass** der Befestigungsbereich (9c) den ersten und den zweiten Teilbereich (9a, 9b) überspannt oder verbindet.

2. Achstrichtergehäuse (9) nach Anspruch 1, wobei der Befestigungsbereich (9c) mindestens einen ersten Befestigungspunkt (32) und einen zweiten Befestigungspunkt (32) aufweist, wobei sich der zweite Befestigungspunkt (32) in einem größeren Abstand von der Längsachse (Z) befindet als der erste Befestigungspunkt (32).

3. Achstrichtergehäuse (9) nach Anspruch 2, wobei jeder der Befestigungspunkte (32) eine Materialanhäufung aufweist, die einen Vorsprung an der Oberfläche des jeweiligen ersten oder zweiten Teilbereichs (9a, 9b) bereitstellt.

4. Achstrichtergehäuse (9) nach Anspruch 2 oder Anspruch 3, wobei der Befestigungsbereich (9c) so geformt ist, dass er eine Mulde zwischen dem ersten und dem zweiten Befestigungspunkt (32) bereitstellt.

5. Achstrichtergehäuse nach einem der Ansprüche 2 bis 4, wobei jeder Befestigungspunkt (32) eine im Wesentlichen ebene Oberfläche für die Aufnahme eines Dehnungssensors (30) aufweist, wobei die entsprechenden ebenen Oberflächen des Befestigungsbereichs (9c) komplanar dazu verlaufen.

6. Achstrichtergehäuse (9) nach einem der Ansprüche 2 bis 5, wobei jeder Befestigungspunkt (32) mindestens eine Gewindebohrung (29) für die Aufnahme eines entsprechend mit einem Gewinde versehenen Befestigungsmittels (31) für die Befestigung eines Dehnungssensors (30) aufweist.

7. Achstrichtergehäuse (9) nach Anspruch 3, wobei mindestens einer der Befestigungspunkte (32) einen weiteren Vorsprung aufweist, der eine seitliche Bewegung eines an dem Befestigungsbereich (9c) befestigten Dehnungssensors (30) beschränkt.

8. Achstrichtergehäuse (9) nach einem der Ansprüche 2 bis 6, wobei der Befestigungsbereich (9c) mindestens vier Befestigungspunkte (32) aufweist.

9. Achstrichtergehäuse (9) nach einem der vorhergehenden Ansprüche, wobei der Befestigungsbereich (9c) an einer inneren Oberfläche des Gehäuses (9) gebildet ist.

10. Hinterachsbaugruppe (6) für ein landwirtschaftliches Fahrzeug mit einem Paar von Achstrichtergehäusen (9) nach einem der vorhergehenden Ansprüche, wobei von einem Paar von Radnaben (11) jede an einem der entsprechenden haubenartigen Gehäuse (9) befestigt und um die Längsachse (Z) drehbar ist, wobei ein Differential zum Übertragen von Drehmoment auf die Radnaben (11) verbunden ist, wobei ein Differentialgehäuse (8) das Differential teilweise umgibt und die haubenartigen Gehäuse (9) an diesem befestigt sind, und wobei mindestens ein Dehnungssensor (30) an dem Befestigungsbereich (9c) eines der haubenartigen Gehäuse (9) montiert ist.

11. Hinterachsbaugruppe (6) nach Anspruch 10, wobei jedes der haubenartigen Gehäuse (9) mindestens einen an diesem montierten Dehnungssensor (30) aufweist.

12. Hinterachsbaugruppe (6) nach Anspruch 10 oder Anspruch 11, wobei der eine Dehnungssensor (30) oder jeder der Dehnungssensoren (30) zwischen einer Wand des Gehäuses (9) und einer entsprechenden Schutzhülle eingeschlossen ist.

13. Achslastmessvorrichtung mit einer Hinterachsbaugruppe (6) nach einem der Ansprüche 10 bis 12 und einem Datenverarbeitungsmittel (100), das für das Empfangen eines Ausgangssignals von dem einen Dehnungssensor (30) oder jedem der Dehnungssensoren (30) angeschlossen und zum Erzeugen eines darauf basierenden für die Achslast repräsentativen Ausgangswerts angeordnet ist.

14. Landwirtschaftliches Fahrzeug mit einer Achslastmessvorrichtung nach Anspruch 13, wobei der Ausgangswert des Datenverarbeitungsmittels (100) repräsentativ für die Zugkraft des Fahrzeugs ist.

15. Landwirtschaftliches Fahrzeug nach Anspruch 14, weiterhin mit einem Mittel zum Regeln von einer Dreipunktverbindung oder Systemen zum Verbessern der Effizienz oder Traktion basierend auf dem Ausgangswert des Datenverarbeitungsmittels (100).

## Revendications

1. Boîtier en trompette (9) destiné à un ensemble d'essieu rigide (6) présentant un axe longitudinal (Z) et comprenant une première partie (9a) s'étendant le long dudit axe (Z) et présentant un profil sensiblement constant, et une seconde partie (9b) fixée sur la première partie (9a) et présentant un profil croissant en distance par rapport à l'axe (Z), lorsque la distance par rapport à la première partie (9a) augmente, dans lequel le boîtier (9) comprend en outre une zone de fixation (9c) formée de manière à recevoir un capteur de contrainte (30) afin d'assurer la détermination d'une charge de roue, **caractérisé en ce que** la zone de fixation (9c) rejoint les première et seconde parties (9a, 9b).

2. Boîtier en trompette (9) selon la revendication 1, dans lequel la zone de fixation (9c) comporte au moins un premier point de montage (32) et un second point de montage (32), le second point de montage (32) étant à une distance supérieure, par rapport à l'axe longitudinal (Z), à celle du premier point de montage (32).

3. Boîtier en trompette (9) selon la revendication 2, dans lequel chaque point de montage (32) comprend une accumulation de matière formant une saillie à partir de la surface de la première ou seconde partie (9a, 9b) respective.

4. Boîtier en trompette (9) selon la revendication 2 ou 3, dans lequel la zone de fixation (9c) est formée de manière à présenter une tranchée entre les premier et second points de montage (32).

5. Boîtier en trompette selon l'une quelconque des revendications 2 à 4, dans lequel chaque point de montage (32) comporte une surface sensiblement plate afin de recevoir un capteur de contrainte (30), les surfaces plates respectives de la zone de fixation (9c) étant coplanaire.

6. Boîtier en trompette (9) selon l'une quelconque des revendications 2 à 5, dans lequel chaque point de montage (32) comporte au moins un alésage fileté (29) afin de recevoir un moyen de fixation fileté (31) correspondant, de manière à fixer un capteur de contrainte (30).

7. Boîtier en trompette (9) selon la revendication 3, dans lequel un ou plusieurs des points de montage (32) comportent une saillie supplémentaire limitant le déplacement latéral du capteur de contrainte (30) monté sur la zone de fixation (9c).

8. Boîtier en trompette (9) selon l'une quelconque des revendications 2 à 6, dans lequel la zone de fixation (9c) comprend au moins quatre points de montage (32).

9. Boîtier en trompette (9) selon l'une quelconque des revendications précédentes, dans lequel la zone de fixation (9c) est formée sur une surface interne du boîtier (9).

10. Ensemble d'essieu arrière (6) destiné à un véhicule agricole comprenant une paire de boîtiers en trompette (9) selon l'une quelconque des revendications précédentes, une paire de moyeux de roue (11), chacun étant monté sur l'un respectif de boîtiers en trompette (9) identiques et pouvant tourner autour de l'axe longitudinal (Z), un différentiel couplé de manière à transférer un couple vers les moyeux de roue (11), un boîtier de différentiel (8) entourant partiellement le différentiel et sur lequel les boîtiers en trompette (9) sont fixés, et au moins un capteur de contrainte (30) monté sur la zone de fixation (9c) d'un premier des boîtiers en trompette (9).

11. Ensemble d'essieu arrière (6) selon la revendication 10, dans lequel au moins un capteur de contrainte (30) est monté sur chaque boîtier en trompette (9).

12. Ensemble d'essieu arrière (6) selon la revendication 10 ou 11, dans lequel le ou chaque capteur de contrainte (30) est intégré entre une paroi du boîtier (9) et un couvercle de protection respectif.

13. Dispositif de mesure de charge d'essieu comprenant un ensemble d'essieu arrière (6) selon l'une quelconque des revendications 10 à 12 et un moyen de traitement numérique (100) couplé de manière à recevoir un signal de sortie à partir du ou de chaque capteur de contrainte (30) et agencé de manière à produire une valeur de sortie représentative de la charge d'essieu sur la base de celui-ci.

14. Véhicule agricole comprenant un dispositif de mesure de charge d'essieu selon la revendication 13, dans lequel la valeur de sortie du moyen de traitement numérique (100) est représentative d'un effort de traction de véhicule.

15. Véhicule agricole selon la revendication 14, comprenant en outre un moyen destiné à commander une liaison en trois points ou des dispositifs destinés à améliorer l'efficacité ou la traction sur la base de la valeur de sortie du moyen de traitement numérique (100).
